# EUROPÄISCHE PATENTANMELDUNG

(11) **EP 4 092 656 A1**
(43) Veröffentlichungstag der Anmeldung: **23.11.2022**
(21) Anmeldenummer: 21175286.0
(22) Anmeldetag: 21.05.2021
(51) Int. Cl.: G09C 5/00, H04L 9/06, H04L 9/32

(54) **AUTHENTIFIZIERUNG VON ETIKETTEN ODER SONSTIGER IDENTIFIKATOR EINES ANBIETERS**

(71) Anmelder: Bayer AG, 51373 Leverkusen (DE)
(72) Erfinder: Schmid, Ernst-Georg, 47249 Duisburg (DE); Gippert, Torsten, 50679 Köln (DE); Göke, Dennis, 51067 Köln (DE)
(74) Vertreter: BIP Patents

(57) **Zusammenfassung**

Die Anmeldung betrifft ein Objekt-Identifikator für ein Objekt umfassend eine zugängliche kodierte Repräsentation von mindestens einer eindeutigen Kennung für das Objekt und einer digitalen Signatur, in der zu signierenden Daten mit Hilfe einer Hash-Funktion und einer geheimen Schlüssel komprimiert werden, wobei der geheime Schlüssel ein Bestandteil eines Schlüsselpaares für eine asymmetrische Verschlüsselung umfassend einen öffentlichen Schlüssel und den geheimen Schlüssel ist, und wobei die zu signierenden Daten mindestens die eindeutige Kennung für jedes Objekt umfassen, sowie dessen Bereitstellung und Anwendung zur Authentifizierung von Etiketten oder sonstigen Identifikatoren für Objekte (zusammen Objekt-Identifikatoren genannt).

## Beschreibung

Die vorliegende Erfindung befasst sich mit dem technischen Gebiet der Authentifizierung von Etiketten oder sonstigen Identifikatoren für Objekte (zusammen Objekt-Identifikatoren genannt). Gegenstände der vorliegenden Erfindung sind ein Verfahren, ein Identifikator und ein computerlesbares Speichermedium.

Die Offenlegungsschrift WO2020/234209A1 beschreibt Funketiketten, die mit einem Produkt oder einer Verpackung eines Produkts verbunden werden können und in zeitlichen Abständen eine eindeutige Kennung über ein Mobilfunknetzwerk an einen Empfänger senden. Die Funketiketten können beispielsweise genutzt werden, um das Produkt entlang eines Transportweges zu verfolgen.

Über die eindeutige Kennung eines Objekt-Identifikator (z. B. auf eine Verpackung oder ein Etikett) kann das Produkt eindeutig zugeordnet werden. Dazu ist es jedoch erforderlich, die eindeutige Kennung dem entsprechenden Produkt zuzuordnen (logische Verknüpfung). Im Beispiel eines Funketiketts muss dieses aktiviert und angemeldet werden, damit die von dem Funketikett versandten Informationen auch durch den Betreiber des Mobilfunknetzes aufgefangen und an den Empfänger weitergeleitet werden können.

Üblicherweise gibt es eine Mehrzahl an Anbietern von (Funk)Etiketten oder Verpackungen mit Identifikatoren, die ihre Produkte über verschiedene Vertriebskanäle vertreiben. Denkbar ist beispielsweise, dass derartige Etiketten oder Verpackungen mit Identifikatoren durch einen Kunden im Einzelhandel erworben werden können. Damit ein solcher Kunde den Identifikator verwenden und beispielsweise den Transportweg eines Objekts verfolgen kann, muss er den Identifikator bei einem Dienstleister registrieren. Dazu muss der Dienstleister überprüfen können, wer den Identifikator produziert hat und ob er gültig ist. Üblicherweise werden solche Informationen zentral, eventuell im Rahmen einer Service-Leistung, verwaltet.

Es besteht daher den Bedarf diese Verwaltung zu vereinfachen.

Ferner hat der Kunde ein Interesse daran, sicherzustellen, dass die gelieferten (Funk)Etiketten oder die Objekt-Identifikator der gelieferten Objekte nicht gefälscht oder geändert wurden.

Es besteht also ein Bedarf an einer effektiven Lösung für das sichere und einfache Registrieren und Verwalten von solchen Objekt-Identifikatoren.

Diese Aufgabe wird durch die Gegenstände der vorliegenden unabhängigen Patentsprüche gelöst. Bevorzugte Ausführungsformen finden sich in den abhängigen Patentansprüchen, der vorliegenden Beschreibung und den Zeichnungen.

Die erfinderische Lösung basiert auf die Idee, den Anbieter eines Objekts mit Objekt-Identifikator aus der im Objekt-Identifikator hinterlegten Information eindeutig identifizieren zu können, wobei diese Information durch eine Signatur gesichert ist, und erst mit Hilfe eines pro Anbieter spezifischen, öffentlichen Schlüssels aus dem Objekt-Identifikator ablesbar ist.

Ein Objekt im Sinne der Anmeldung kann ein Etikett, ein Funketikett oder eine Verpackung umfassend einen gedruckten oder in sonstiger Weise gespeicherten Objekt-Identifikator sein.

Die Erfindung wird nachfolgend näher beschrieben, ohne zwischen den Erfindungsgegenständen (Verfahren und System) zu unterscheiden. Die nachfolgenden Erläuterungen sollen vielmehr für alle Erfindungsgegenstände in analoger Weise gelten, unabhängig davon, in welchem Kontext (Verfahren oder System) sie erfolgen.

Bei der Signaturerstellung werden ein geheimer Schlüssel und eine Hash-Funktion verwendet, um eine digitale Signatur zu generieren. Bei der Signaturüberprüfung werden ein öffentlicher Schlüssel und dieselbe Hash-Funktion verwendet, wobei der öffentliche Schlüssel zu dem privaten Schlüssel passt, aber nicht mit diesem identisch ist. Diese Methode ist im Standarddokument NIST.FIPS.186 (z.B. in https://nvlpubs.nist.gov/nistpubs/FIPS/NIST.FIPS.186-4.pdf) näher beschrieben. Jeder Unterzeichner - bei der vorliegenden Erfindung, der Anbieter - besitzt ein privates und ein öffentliches Schlüsselpaar. Der öffentliche Schlüssel wird dem Kunden bekannt gemacht. Der private Schlüssel wird geheim gehalten. Jeder Kunde kann die Signatur überprüfen, indem er den öffentlichen Schlüssel des Unterzeichners verwendet. Nur der Benutzer, der über den geheimen Schlüssel verfügt, kann die Signaturgenerierung durchführen.

Mit Hilfe der beschriebenen Lösung kann sich den Austausch von Informationen zwischen Anbieter und Kunde auf den Austausch eines öffentlichen Schlüssels reduzieren, die das Ablesen aller Objekt-Identifikatoren des Anbieters ermöglicht.

Ein erster Gegenstand der vorliegenden Erfindung ist daher ein Verfahren zur Bereitstellung eines oder mehrerer Objekt-Identifikatoren umfassend die Schritte:
- Spezifisch für einen Anbieter, erzeugen eines Schlüsselpaares für eine asymmetrische Verschlüsselung von zu signierenden Daten umfassend einen geheimen Schlüssel für das Generieren einer digitalen Signatur mit Hilfe einer Hash-Funktion und einen öffentlichen Schlüssel für das Überprüfen der generierten digitalen Signatur;
- Erzeugen von zu signierenden Daten für den Objekt-Identifikator, wobei die zu signierenden Daten mindestens eine eindeutige Kennung für jeden Objekt-Identifikator umfassen,
- Generieren der digitalen Signatur mit Hilfe des geheimen Schlüssels und der Hash-Funktion;
- Erzeugen einer zugänglichen kodierten Repräsentation (z. B. einer optoelektronisch lesbare Schrift) mindestens der eindeutigen Kennung für Objekt mit dem Objekt-Identifikator und der digitalen Signatur,
- Bereitstellen des Objekts mit dem Objekt-Identifikator, wobei das Objekt die zugängliche kodierte Abbildung des Objekt-Identifikators aufweist;
- Übermitteln des Objekts und des öffentlichen Schlüssels an einen Nutzer des Objekts.

Eine eindeutige Kennung im Sinne der Anmeldung wird nach Anwendung ausgewählt und kann aus Zahlen, Buchstaben, Bilder oder Kombination hiervon, vorausgesetzt sie ist Objekt-spezifisch.

In einem Beispiel ist die eindeutige Kennung ein Universally Unique Identifier (UUID), eine 128-BitZahl, welche zur Identifikation von Informationen in Computersystemen verwendet wird. Beispiele für UUID sind im Standard beschreibenden Dokument ISO/IEC 11578:1996 "Information technology - Open Systems Interconnection - Remote Procedure Call (RPC)" und als separater Standard ISO/IEC 9834-8:2005 dokumentiert.

In einem Beispiel besteht der UUID aus einer 16-Byte-Zahl, die hexadezimal notiert und in fünf Gruppen unterteilt wird.

In einem weiteren Beispiel umfassen die zu signierenden Daten weitere Informationen. Weitere Informationen können auch in die kodierte Abbildung direkt oder nach einer eigener Hash-Kodierung einkodiert werden. Solche weiteren Informationen sind z. B. den Namen des Anbieters, Configuration URL des Anbieters, Produktname, Batchnummer, Preis, Zieladresse, usw...

Die Informationsmenge ist lediglich begrenzt durch die Kapazität der ausgewählten kodierten Abbildung als Datenträger für die Informationen.

Die Hash-kodierte Version der zu signierenden Daten wird als Message Digest bezeichnet. Der Message Digest wird in den Algorithmus für digitale Signaturen eingegeben, um die digitale Signatur zu generieren. Die Auswahl obliegt dem Anbieter des Objekts, umfasst aber mindestens die eindeutige Kennung des Objekts.

Bei der Signaturgenerierung wird eine Hash-Funktion verwendet, um eine eindeutige Signatur der zu signierenden Daten zu erhalten. Geeignete Hash-Funktionen sind z. B. die, die im Secure Hash Standard (SHS), FIPS 180, festgelegt sind.

In einem Beispiel ist die Signatur-Funktion der Elliptic Curve Digital Signature Algorithm (ECDSA), wie z. B. aus dem Standarddokument NIST FIPS-186, ein RSA-Kryptosystem, ein Digital Signature Algorithm (DSA). Alternativ kann jedes asymmetrisches Kryptosystem verwendet werden, welches die nötige Sicherheit liefert. Bevorzugt wird ECDSA verwendet, da er eine kürzere Signatur erzeugt; entsprechend können mehr Informationen in der optoelektronisch lesbaren Schrift hinterlegt werden.

In einem Beispiel ist die zugängliche kodierte Repräsentation eine optoelektronisch lesbare Schrift, wie zum Beispiel ein QR-Code, ein Data Matrix Code, ein AZTEC Code oder ein JAB Code (https://jabcode.org/). Für einen einfachen Druck auf einem Etikett oder auf einem Objekt wird ein Schwarz-Weiße Druck, wie z. B. ein QR-Code, bevorzugt.

Den QR Code kann vom Nutzer optisch gescannt werden.

In einem Beispiel kann die zugängliche kodierte Repräsentation mit einem Sender-Empfänger System gespeichert und gelesen werden.

Es wird vermerkt, dass die zugängliche kodierte Repräsentation nur zugänglich sein muss. Es wäre daher auch möglich, diese manuell (abtippen) oder rein maschinell, z. B. über Bluetooth, usw. zu übertragen.

Sobald der Nutzer über den öffentlichen Schlüssel verfügt, kann er selbständig alle Informationen der zugänglichen kodierten Repräsentation entnehmen:
- Der Nutzer kann die zugängliche kodierte Repräsentation dekodieren; die eindeutige Kennung des Objekts wird im Klartext wiedergegeben.
- Der Nutzen kann die Signatur mithilfe des öffentlichen Schlüssels des entsprechenden Anbieters und derselben Hash-Funktion, die zum Generieren der Signatur verwendet wurde, den Objekt-Identifikator überprüfen. Passt der öffentliche Schlüssel werden die Echtheit und die Integrität des Objekt-Identifikators bestätigt.
- Der Nutzer kann mit dem öffentlichen Schlüssel des Anbieters die Signatur prüfen, indem er die signierten Informationen mit dem öffentlichen Schlüssel entschlüsselt und den entschlüsselten Hashwert mit dem Hashwert der im Klartext vorliegenden Daten vergleicht.
- Der Nutzer findet den Anbieter dadurch, dass nur mit dessen öffentlichem Schlüssel die Information erfolgreich und sinnvoll dekodiert werden kann.

Der erforderliche Fluss vertrauenswürdiger Informationen zwischen Anbieter und Kunde ist minimal; der öffentlichen Schlüssel wird nur einmal ausgetauscht.

In einem Beispiel wird der öffentliche Schlüssel durch ein sicheres System ausgetauscht:
a) Persönlich oder via einen Notar oder sonstige Hinterlegungsstelle; oder elektronisch unter Anwendung eines Verschlüsselungsprotokolls zur sicheren Datenübertragung im Internet, wie z. B.:
b) SSH-Netzwerkprotokoll für verschlüsselte Verbindung;
c) TLS mit Zertifikat z. B. mit Typ X.509 Certificate (etablierter Standard); oder
d) Unter Anwendung von Blockchain, indem der öffentlichen Schlüssel auf einer Blockchain veröffentlicht wird.

Arbeitet ein Unternehmer mit einer Vielzahl von Anbietern, kann die Anzahl der öffentlichen Schlüssel eine gewisse Verwaltung erfordern.

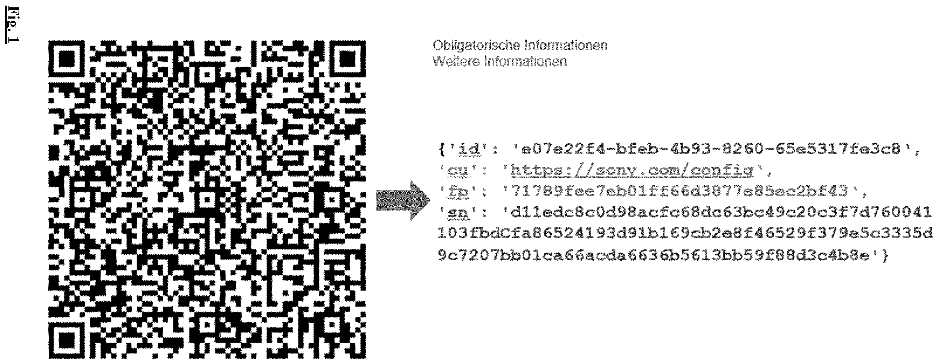

In einem Beispiel kann ein Fingerprint der öffentlichen Schlüssel mit Hilfe einer Hash-Funktion (Fig. 1, fp - Fingerprint des öffentlichen Schüssels) erzeugt werden und in einer zugänglichen kodierten Repräsentation kodiert werden. Dekodiert der Käufer die zugänglichen kodierten Repräsentation, kann er diesen Fingerprint der öffentlichen Schlüssel als ID für den Anbieterschlüssel in einer für diesen Zweck hinterlegten Datenbank suchen und den benötigten öffentlichen Schlüssel finden durch Enumeration aller bekannten öffentlichen Schlüssel.

Weist das Etikett oder das Objekt mit der zugänglichen kodierten Repräsentation zusätzlich einen Fingerprint des öffentlichen Schüssels auf, kann der Nutzer von dem erhaltenen öffentlichen Schlüssel den Hash-Code mit der entsprechenden Hash-Methode erzeugen und den erzeugten Hash-Code mit dem Hash-Code des Etiketts vergleichen. Auf diese Weise kann der Nutzer den Anbieter des Funketiketts schneller identifizieren als durch Enumeration aller bekannten öffentlichen Schlüssel.

Ein weiterer Gegenstand der vorliegenden Erfindung ist ein Objekt-Identifikator gemäß Anspruch 3. Bevorzugte Ausführungsformen finden sich in den abhängigen Patentansprüchen, der vorliegenden Beschreibung und den Zeichnungen.

Das erfindungsgemäß Objekt-Identifikator umfasst eine zugängliche kodierte Repräsentation von:
- mindestens einer eindeutigen Kennung für das Etikett und
- einer digitalen Signatur, in der zu signierenden Daten mit Hilfe einer Hash-Funktion und einem geheimen Schlüssel signiert werden, wobei der geheime Schlüssel ein Bestandteil eines Schlüsselpaares für eine asymmetrische Verschlüsselung umfassend einen öffentlichen Schlüssel und den geheimen Schlüssel ist, und wobei die zu signierenden Daten mindestens die eindeutige Kennung für jedes Etikett umfassen.

In einem Beispiel ist in der zugänglichen kodierten Repräsentation ein Fingerprint des öffentlichen Schlüssels hinterlegt, wobei der Fingerprint aus dem öffentlichen Schlüssel mit Hilfe einer Hash-Funktion erzeugt ist, und mit Hilfe dieser Hash-Funktion ablesbar ist.

In einem Beispiel ist in der zugänglichen kodierten Repräsentation den Namen des Anbieters des Objekts hinterlegt.

Ein weiterer Gegenstand der Erfindung ist ein Computer-implementiertes Verfahren zur Herstellung einer oder mehrerer Objekt-Identifikatoren umfassend folgende Schritte:
- Empfangen oder Abruf eines öffentlichen Schlüssels,
- Empfangen oder Abruf eines geheimen Schlüssels,
wobei der öffentliche Schlüssel und das geheime Schlüssel spezifisch für einen Anbieter sind und Bestandteile eines Schlüsselpaares für eine asymmetrische Verschlüsselung von zu signierenden Daten mit Hilfe einer Hash-Funktion in einer digitalen Signatur sind;
- Empfangen oder generieren einer eindeutigen Kennung für jeden Objekt-Identifikator;
- Optional empfangen von weiteren Daten für den Objekt-Identifikator und deren Nutzungskategorie als zu signierenden Daten oder zu kodierten Daten;
- Genieren der digitalen Signatur mit Hilfe des geheimen Schlüssels und der Hash-Funktion, wobei in der digitalen Signatur mindestens die eindeutigen Kennung sowie optional die weiteren zu signierenden Daten komprimiert werden;
- Erzeugen einer zugänglichen kodierten Repräsentation mindestens der eindeutigen Kennung für das Etikett, der digitalen Signatur und optional der weiteren zu kodierten Daten;
- Übertragung der zugänglichen kodierten Repräsentation an einen Drucker oder an einen Sender-Empfänger System zur Markierung eines Objekts.

In einem Beispiel wird ein Fingerprint des öffentlichen Schlüssels mit Hilfe einer Hash-Funktion erzeugt bzw. einen Fingerprint des öffentlichen Schlüssels empfangen und als zu kodierte Daten in die zugängliche kodierte Repräsentation kodiert.

In einem weiteren Beispiel werden der Name des Anbieters und den Fingerprint des öffentlichen Schlüssels als zu kodierte Daten in die zugängliche kodierte Repräsentation kodiert.

Ein weiterer Gegenstand der vorliegenden Erfindung ist ein computerlesbares Speichermedium, umfassend Befehle, die bei der Ausführung durch ein Computersystem dieses veranlassen, die Schritte des Computer-implementierten Verfahrens zur Herstellung eines oder mehrerer erfindungsgemäßen Obj ekt-Identifikatoren auszuführen.

Ein weiterer Gegenstand der Erfindung ist ein Computer-implementiertes Verfahren zum Ablesen des erfindungsgemäßen Objekt-Identifikators eines Anbieters, umfassend folgende Schritte:
- Ablesen der in der zugänglichen kodierten Repräsentation kodierten Informationen mit Hilfe eines Lesegeräts und Anzeige mindestens der eindeutigen Kennung im Klartext,
- Empfangen eines öffentlichen Schlüssels, wobei der öffentliche Schlüssel ein Bestandteil eines Schlüsselpaares erzeugt durch den Anbieter für eine asymmetrische Verschlüsselung umfassend den öffentlichen Schlüssel, einen geheimen Schlüssel und eine Hash-Funktion ist;
- Überprüfen der digitalen Signatur mithilfe des öffentlichen Schlüssels und der Hash-Funktion;
- Anzeige einer Fehlermeldung falls die digitale Signatur mit Hilfe des öffentlichen Schlüssels und der Hash-Funktion nicht entschlüsselt werden kann;
   alternativ
- Entschlüsselung von in der digitalen Signatur komprimierten zu signierenden Daten mit Hilfe desöffentlichen Schlüssels und der Hash-Funktion und Anzeige der zu signierenden Daten, wobei diese mindestens die eindeutige Kennung für den Objekt-Identifikator umfassen;
- Abgleich der eindeutigen Kennung aus den zu signierenden Daten mit der eindeutigen Kennung aus der zugänglichen kodierten Repräsentation.

In einem Beispiel umfasst das Verfahren zum Ablesen des erfindungsgemäßen Objekt-Identifikators, folgende weitere Schritte:
- Ablesen der in der zugänglichen kodierten Repräsentation mit Hilfe eines Lesegeräts und Anzeige mindestens eines Fingerprints des öffentlichen Schlüssels,
- Entschlüsselung des Fingerprints des öffentlichen Schlüssels mit Hilfe der Hash-Funktion mit der den Fingerprint des öffentlichen Schlüssels erzeugt worden war;
- Anzeige des öffentlichen Schlüssels aus dem Fingerprint im Klartext;
- Abgleich des öffentlichen Schlüssels aus dem Fingerprint im Klartext mit einem Eintrag aus einer Datenbank, umfassend Information zum Anbieter und seinen spezifischen öffentlichen Schlüssel;
- Anzeige des zum öffentlichen Schlüssel gehörigen Anbieter.

In einem Beispiel umfasst die zugänglichen kodierten Repräsentation kodierten Informationen zum Anbieter und die Anzeige des zum öffentlichen Schlüssel gehörigen Anbieter wird mit dieser Angaben aus der optoelektronisch lesbaren Schrift abgeglichen und ausgegeben.

Ein weiterer Gegenstand der vorliegenden Erfindung ist ein computerlesbares Speichermedium, umfassend Befehle, die bei der Ausführung durch ein Computersystem dieses veranlassen, die die Schritte des Computer-implementierten Verfahrens zum Ablesen des erfindungsgemäßen Objekt-Identifikators auszuführen.

Ein weiterer Gegenstand der vorliegenden Erfindung ist ein Computersystem zum Ablesen von erfindungsgemäßen Objekt-Identifikatoren, umfassend:
- einen Speicher, der einen oder mehrere Befehle speichert;
- einen oder mehrere Prozessoren, die konfiguriert sind, um den einen oder die mehreren Befehle auszuführen, die, wenn sie ausgeführt werden von den einem oder mehreren Prozessoren verursachen:
- Ablesen der in der zugänglichen kodierten Repräsentation kodierten Informationen mit Hilfe eines Lesegeräts und Anzeige mindestens der eindeutigen Kennung für den Objekt-Identifikator im Klartext,
- Empfangen eines öffentlichen Schlüssels, wobei der öffentliche Schlüssel ein Bestandteil eines Schlüsselpaares erzeugt durch den Anbieter für eine asymmetrische Verschlüsselung umfassend den öffentlichen Schlüssel, einen geheimen Schlüssel und eine Hash-Funktion ist;
- Überprüfen der digitalen Signatur mithilfe des öffentlichen Schlüssels und der Hash-Funktion;
- Anzeige einer Fehlermeldung falls die digitale Signatur mit Hilfe des öffentlichen Schlüssels und der Hash-Funktion nicht entschlüsselt werden kann;
- alternativ
- Entschlüsselung von in der digitalen Signatur komprimierten zu signierenden Daten mit Hilfe des öffentlichen Schlüssels und der Hash-Funktion und Anzeige der zu signierenden Daten, wobei diese mindestens die eindeutige Kennung für den Objekt-Identifikator umfassen;
- Abgleich der eindeutigen Kennung aus den zu signierenden Daten mit der eindeutigen Kennung aus der zugänglichen kodierten Repräsentation.

In einem Beispiel umfasst das Computersystem eine Datenbank, in der Information zum Anbieter und seinen spezifischen öffentlichen Schlüssel gespeichert sind und einen oder mehrere Prozessoren, die konfiguriert sind, um folgenden Befehle auszuführen:
- Ablesen der in der zugänglichen kodierten Repräsentation kodierten Informationen mit Hilfe eines Lesegeräts und Anzeige mindestens eines Fingerprints des öffentlichen Schlüssels,
- Entschlüsselung des Fingerprints des öffentlichen Schlüssels mit Hilfe der Hash-Funktion mit der den Fingerprint des öffentlichen Schlüssels erzeugt worden war;
- Anzeige des öffentlichen Schlüssels aus dem Fingerprint im Klartext; und/oder
- Abgleich des öffentlichen Schlüssels aus dem Fingerprint im Klartext mit einem Eintrag aus einer Datenbank, umfassend Information zum Anbieter und seinen spezifischen öffentlichen Schlüssel und Anzeige des zum öffentlichen Schlüssel gehörigen Anbieter.

Die Verwendung der Begriffe "ein" und "einen" und "der" und ähnlicher Verweise im Zusammenhang mit der Beschreibung der Erfindung (insbesondere im Zusammenhang mit den folgenden Ansprüchen) ist so auszulegen, dass sie sowohl den Singular als auch den Plural abdecken, sofern nicht anders angegeben hier angegeben oder durch den Kontext eindeutig widersprochen. Die Begriffe "umfassend", "einschließlich", "mit" und "enthaltend" sind als offene Begriffe zu verstehen (dh "einschließlich, aber nicht beschränkt auf'), sofern nicht anders angegeben.

Die Verwendung sämtlicher hierin bereitgestellter Beispiele oder beispielhafter Sprachen (z. B. "wie") soll lediglich die Erfindung besser beleuchten und schränkt den Umfang der Erfindung nicht ein, sofern nicht anders angegeben. Keine Sprache in den Spezifikationen sollte so konstruiert sein, dass sie ein nicht beanspruchtes Element anzeigt, das für die Durchführung der Erfindung wesentlich ist.

Bevorzugte Ausführungsformen dieser Erfindung werden beschrieben, einschließlich des besten Modus, der den Erfindern zum Tragen bekannt ist aus der Erfindung. Variationen dieser bevorzugten Ausführungsformen können für den Durchschnittsfachmann offensichtlich werden, solche Variationen gegebenenfalls anzuwenden, und die Erfinder beabsichtigen, dass die Erfindungen anders als hierin spezifisch beschrieben praktiziert werden. Dementsprechend umfasst diese Erfindung alle Modifikationen und Äquivalente des Gegenstands, die in den beigefügten Ansprüchen aufgeführt sind, soweit dies nach geltendem Recht zulässig ist. Darüber hinaus umfasst jede Kombination der oben beschriebenen Elemente in allen möglichen Variationen davon die Erfindung, sofern hierin nicht anders angegeben oder durch den Kontext eindeutig anders widersprochen.

### Beschreibung der Figuren:

Figur 1 zeigt exemplarisch als zugänglichen kodierten Repräsentation ein QR-Code und kodierten Informationen.

Exemplarisch werden als obligatorische Informationen genannt:
- id: die eindeutige Kennung des Etiketts;
- sn: die Signatur

Exemplarisch werden als weitere Informationen genannt:
- cu: das Configuration URL des Anbieters
- fp: den Fingerprint der öffentlichen Schlüssel.

### Beispiel:

In einem Beispiel wurde als eindeutigen Kennung / ID ein UUID Type 4 or 5 (ISO/IEC 9834-8:2005) verwendet.

Als Hash-Funktion für die Signatur wurde ECDSA-NIST P-256 (NIST FIPS-186, mit einer elliptischen Kurve von 256 Bit) mit einer Signatur Hash SHA3-256 (NIST FIPS 202; auch 256 Bit Länge) verwendet.

Die Länge der Signatur Hash wurde entsprechend der Länge der Elliptische Kurve ausgewählt. Die am Häufigsten verwendete, als kryptographisch zuverlässig eingestufte Kurve ist 256 Bit lang.

Als Hash-Funktion für den öffentlichen Schlüssel wurde BLAKE2b verwendet, ein Hash-Algorithmus, der die Auswahl einer optimalen Länge für den Fingerprint des öffentlichen Schüssels ermöglicht.

Alternativ können andere asymmetrische kryptographische Verfahren und Hash-Funktionen verwendet werden, die gemäß Stand der Technik als sicher gelten.

Als optoelektronisch lesbare Schrift wurden QR-Codes ausgewählt.

ECDSA verwendet kürzere Signaturen als RSA, die Kombination ECDAS und QR-Codes hat sich als vorteilhaft erwiesen.

## Patentansprüche

1. Verfahren zur Bereitstellung eines Objekts mit einem Objekt-Identifikator umfassend die Schritte:
- Spezifisch für einen Anbieter, erzeugen eines Schlüsselpaares für eine asymmetrische Verschlüsselung von zu signierenden Daten umfassend einen geheimen Schlüssel für das Generieren einer digitalen Signatur mit Hilfe einer Hash-Funktion und einen öffentlichen Schlüssel fürs Ablesen der generierten digitalen Signatur;
- Erzeugen von zu signierenden Daten für den Objekt-Identifikator, wobei die zu signierenden Daten mindestens eine eindeutige Kennung für jedes Objekt-Identifikator umfassen,
- Generieren der digitalen Signatur mit Hilfe des geheimen Schlüssels und der Hash-Funktion;
- Erzeugen einer zugänglichen kodierten Repräsentation mindestens der eindeutigen Kennung für den Objekt-Identifikator und der digitalen Signatur,
- Bereitstellen des Objekts, wobei das Objekt die zugängliche kodierte Repräsentation aufweist;
- Übermitteln des Objekts und des öffentlichen Schlüssels an einen Nutzer.

2. Das Verfahren nach Anspruch 1, wobei die Hash-Funktion für die Signatur ECDSA-NIST P-256 ist, die eine Signatur im Format SHA3-256 erzeugt.

3. Objekt-Identifikator für ein Objekt umfassend eine zugängliche kodierte Repräsentation von:
- mindestens einer eindeutigen Kennung für das Objekt und
- einer digitalen Signatur, in der zu signierenden Daten mit Hilfe einer Hash-Funktion und einer geheimen Schlüssel komprimiert werden, wobei der geheime Schlüssel ein Bestandteil eines Schlüsselpaares für eine asymmetrische Verschlüsselung umfassend einen öffentlichen Schlüssel und den geheimen Schlüssel ist, und wobei die zu signierenden Daten mindestens die eindeutige Kennung für jedes Objekt umfassen.

4. Objekt-Identifikator nach Anspruch 3, umfassend ein Fingerprint der öffentlichen Schlüssel erzeugt mit Hilfe einer Hash-Funktion und in die zugängliche kodierte Repräsentation kodiert.

5. Computer-implementiertes Verfahren zur Herstellung eines oder mehreren Objekt-Identifikatoren nach einem der Ansprüche 3 oder 4 umfassend folgende Schritte:
- Empfangen oder Abruf eines öffentlichen Schlüssels,
- Empfangen oder Abruf eines geheimen Schlüssels,
wobei der öffentliche Schlüssel und das geheime Schlüssel spezifisch für einen Anbieter sind und Bestandteile eines Schlüsselpaares für eine asymmetrische Verschlüsselung von zu signierenden Daten mit Hilfe einer Hash-Funktion in einer digitalen Signatur sind;
- Empfangen oder generieren einer eindeutigen Kennung für jeden Objekt-Identifikator;
- Optional empfangen von weiteren Daten und deren Nutzungskategorie als zu signierenden Daten oder zu kodierten Daten;
- Genieren der digitalen Signatur mit Hilfe des geheimen Schlüssels und der Hash-Funktion, wobei in der digitalen Signatur mindestens die eindeutigen Kennung sowie optional die weiteren zu signierenden Daten komprimiert werden;
- Erzeugen einer zugänglichen kodierten Repräsentation mindestens der eindeutigen Kennung für den Objekt-Identifikator, der digitalen Signatur und optional der weiteren zu kodierten Daten;
- Übertragung der zugänglichen kodierten Repräsentation an einen Drucker oder einen Sender-Empfänger System zur Markierung eines Objekts.

6. Computerlesbares Speichermedium, umfassend Befehle, die bei der Ausführung durch ein Computersystem dieses veranlassen, die Schritte des Computer-implementierten Verfahrens nach Anspruch 5 zur Herstellung eines oder mehreren Objekt-Identifikatoren gemäß einem der Ansprüche 3 oder 4 auszuführen.

7. Computer-implementiertes Verfahren zum Ablesen des Objekt-Identifikators nach einem der Ansprüche 3 oder 4 eines Anbieters, umfassend folgende Schritte:
- Ablesen der in der zugänglichen kodierten Repräsentation kodierten Informationen mit Hilfe eines Lesegeräts und Anzeige mindestens der eindeutigen Kennung für das Etikett im Klartext,
- Empfangen eines öffentlichen Schlüssels, wobei der öffentliche Schlüssel ein Bestandteil eines Schlüsselpaares erzeugt durch den Anbieter für eine asymmetrische Verschlüsselung umfassend den öffentlichen Schlüssel, einen geheimen Schlüssel und eine Hash-Funktion ist;
- Überprüfen der digitalen Signatur mithilfe des öffentlichen Schlüssels und der Hash-Funktion;
- Anzeige einer Fehlermeldung falls die digitale Signatur mit Hilfe des öffentlichen Schlüssels und der Hash-Funktion nicht entschlüsselt werden kann;
alternativ
- Entschlüsselung von in der digitalen Signatur komprimierten zu signierenden Daten mit Hilfe des öffentlichen Schlüssels und der Hash-Funktion und Anzeige der zu signierenden Daten, wobei diese mindestens die eindeutige Kennung für das Etikett umfassen;
- Abgleich der eindeutigen Kennung aus den zu signierenden Daten mit der eindeutigen Kennung aus der zugänglichen kodierten Repräsentation.

8. Das Verfahren nach Anspruch 4, umfassend folgende weitere Schritte:
- Ablesen der in der zugänglichen kodierten Repräsentation kodierten Informationen mit Hilfe eines Lesegeräts und Anzeige mindestens eines Fingerprints des öffentlichen Schlüssels,
- Entschlüsselung des Fingerprints des öffentlichen Schlüssels mit Hilfe der Hash-Funktion mit der den Fingerprint des öffentlichen Schlüssels erzeugt worden war;
- Anzeige des öffentlichen Schlüssels aus dem Fingerprint im Klartext; und/oder
- Abgleich des öffentlichen Schlüssels aus dem Fingerprint im Klartext mit einem Eintrag aus einer Datenbank, umfassend Information zum Anbieter und seinen spezifischen öffentlichen Schlüssel und Anzeige des zum öffentlichen Schlüssel gehörigen Anbieter.

9. Computerlesbares Speichermedium, umfassend Befehle, die bei der Ausführung durch ein Computersystem dieses veranlassen, die die Schritte des Computer-implementierten Verfahrens nach einem der Ansprüche 7 oder 8 zum Ablesen des Objekt-Identifikators nach einem der Ansprüche 3 oder 4 auszuführen.
